(19) Europäisches Patentamt

European Patent Office

Office européen des brevets

(11) Veröffentlichungsnummer : **0 309 701 B1**

(12) **EUROPÄISCHE PATENTSCHRIFT**

(51) Int. Cl.⁵ : **G11B 27/10, G11B 27/28**

(45) Veröffentlichungstag der Patentschrift :
25.09.91 Patentblatt 91/39

(21) Anmeldenummer : 88112968.8

(22) Anmeldetag : 10.08.88

(54) **CD-Spieler mit einem Speicher.**

(30) Priorität : 30.09.87 DE 3732946

(43) Veröffentlichungstag der Anmeldung :
05.04.89 Patentblatt 89/14

(45) Bekanntmachung des Hinweises auf die
Patenterteilung :
25.09.91 Patentblatt 91/39

(84) Benannte Vertragsstaaten :
AT BE CH DE ES FR GB GR IT LI LU NL SE

(56) Entgegenhaltungen :
EP-A- 0 181 020
EP-A- 0 275 355
DE-A- 2 939 912
PATENT ABSTRACTS OF JAPAN, Band 9, Nr.
157 (P-369)[1880], 2. Juli 1985, Seite 35 P 369; &
JP-A-60 32 181 (SONY K.K.) 19-02-1985

(56) Entgegenhaltungen :
PATENT ABSTRACTS OF JAPAN, Band 11, Nr.
233 (P-600)[2680], 30. Juli 1987, Seite 137 P
600; & JP-A-62 46 479 (MATSUSHITA ELEC-
TRIC CO. LTD) 28-02-1987
PATENT ABSTRACTS OF JAPAN, Band 11, Nr.
233 (P-600)[2680], 30. Juli 1987, Seite 137 P
600; & JP-A-62 46 478 (SHARP CORP.) 28-
02-1987

(73) Patentinhaber : Deutsche Thomson-Brandt
GmbH
Hermann-Schwer-Strasse 3 Postfach 1307
W-7730 Villingen-Schwenningen (DE)

(72) Erfinder : Baas, Dieter
Sofienstrasse 10
W-7640 Kehl (DE)
Erfinder : Kühn, Hans-Robert
Haydnweg 9
W-7742 St. Georgen (DE)

## Beschreibung

Die Erfindung betrifft einen CD-Spieler mit einem Speicher mit A Speicherplätzen zum Speichern des Inhaltsverzeichnisses einer eingelegten CD-Platte.

Welche Daten auf einer CD-Platte gespeichert sind und wie sie der CD-Spieler verarbeitet, ist in dem Aufsatz "Zusammenstellen eines CD-Programms" aus Funkschau Nr. 15, 18.07.1986 auf Seite 26-28 beschrieben.

Jede CD-Platte enthält ein Inhaltsverzeichnis, in dem Daten gespeichert sind, die Auskunft geben über die Anzahl der auf der Platte gespeicherten Programmblöcke, deren Anfangszeiten sowie über die Gesamtspieldauer der Platte. Die einzelnen Progbrammblöcke sind in der Regel Musikstükke, doch kann es sich z.B. auch um gesprochenen Text oder verschiedene Geräuschkulissen für die Vertonung von Filmen oder Dias handeln. Auf einer CD-Platte können bis zu 99 Programmblöcke abgespeichert sein, jedoch finden sich auf einer CD-Platte mit Musik meist nur 10 bis 20 verschiedene Musikstücke.

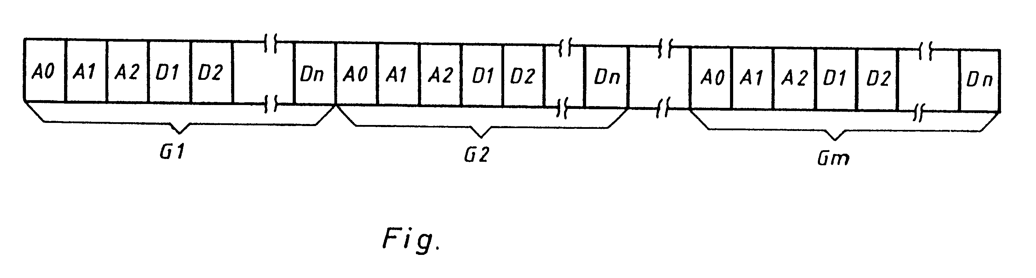

Das Inhaltsverzeichnis einer CD-Platte hat das in der Figur dargestellte Datenformat. Im ersten Block A0 steht der Titel des ersten Musikstücks, im zweiten Block A1 der des letzten Musikstücks und im dritten Block A2 ist die Gesamtspieldauer der CD-Platte angegeben. In den folgenden Blöcken D1 bis Dn stehen die Startzeiten der einzlnen n Musikstücke, die auf der CD-Platte aufgezeichnet sind ; die Blöcke A0, A1, A2, D1 bis Dn sind zu einer Gruppe zusammengefasst, in der das Inhaltsverzeichnis der CD-Platte einmal vollständig gespeichert ist.

Der gesamte auf einer CD-Platte für das Inhaltsverzeichnis vorgesehene Speicherraum ist vollständig mit mehreren dieser unmittelbar aufeinanderfolgenden Gruppen belegt, so daß die Daten des Inhaltsverzeichnisses der CD-Platte mehrfach redundant abgespeichert sind.

Beim Spielen der CD-Platte dienen die Startzeitpunkte D1 bis Dn, die bei mehr als drei Musikstükcen den größten Teil der im Inhaltsverzeichnis gespeicherten Daten ausmachen, zur Berechnung der Anfangszeiten der einzelnen Musikstücke.

Nach dem Einlegen einer CD-Platte in den CD-Spieler werden die einzelnen Titel des Inhaltsverzeichnisses in den Speicher des CD-Spielers gespeichert. Meist reicht der vorhandene Speicherplatz für alle Titel aus. Es gibt jedoch auch CD-Platten mit mehr Titeln als im Speicher des CD-Spielers Platz finden. Wenn z.B. der CD-Spieler zehn Titel speichern kann, auf der eingelegten CD-Platte aber zwanzig Titel aufgezeichnet sind, so erhöhen sich die Zugriffszeiten auf einzelne Titel. Werden beispielsweise die ersten zehn Titel im Speicher des CD-Spielers gespeichert, so sind die Zugriffzeiten für diese Titel zwar gering, jedoch für die nicht gespeicherten restlichen zehn Titel unverhältnismäßig groß.

Es ist daher Aufgabe der Erfindung, den Speicherraum eines CD-Spielers zum Speichern der auf einer CD-Platte aufgezeichneten Titel besser zu nutzen.

Die Erfindung löst diese Aufgabe dadurch, daß, wenn mehr Titel C im Inhaltsverzeichnis der CD-Platte stehen als im CD-Spieler Speicherplätze A vorhanden sind, teilweise oder gänzlich anstelle der Anfangszeiten der einzelnen Titel die Differenz der Anfangszeiten jeweils zweier aufeinanderfolgender Titel gespeichert wird.

An einem Zahlenbeispiel soll die Erfindung nun erläutert werden.

Wenn auf einer CD-Platte mit einer Gesamtspieldauer von 60 Minuten und 20 Sekunden zwanzig Titel mit jeweils einer Spieldauer von drei Minuten eine Sekunde = 181s, einem für Schlager realistischen Wert, aufgezeichnet sind, wird zum Speichern aller 19 Anfangszeiten 181s, 362s bis 3439s etwa 1,4 mal mehr Speicherraum benötig als wenn 19 mal die Differenz 181 gespeichert wird.

Je mehr Titel auf einer CD-Platte aufgezeichnet sind, desto bessere Ergebnisse werden mit der Erfindung erzielt. Wenn z.B. 99 Titel mit je 36s Dauer auf der CD-Platte aufgezeichnet sind, so genügt bei der Erfindung ein etwa um den Faktor 2,3 geringerer Speicherraum.

Weil der Speicherraum besser genutzt wird, verringern sich die Zugriffszeiten. Es tritt nun nicht mehr der Fall stark unterschiedlicher Zugriffszeiten auf, das heißt, daß die wenigen gespeicherten Titel sehr schnell, die nicht abgespeicherten dagegen erst nach relativ langer Zeit gefunden werden.

## Patentansprüche

1. CD-Spieler mit einem Speicher mit A Speicherplätzen zum Speichern des Inhaltsverzeichnisses einer eingelegten CD-Platte, **dadurch gekennzeichnet, daß,** wenn mehr Titel C im Inhaltsverzeichnis der CD-Platte stehen als im CD-Spieler Speicherplätze A vorhanden sind, teilweise oder gänzlich anstelle der Anfangszeiten der einzelnen Titel die Differenz der Anfangszeiten jeweils zweier aufeinanderfolgender Titel gespeichert wird.

2. CD-Spieler nach Anspruch 1, **dadurch gekennzeichnet,** daß die Anfangszeit des ersten Titels gespeichert wird und daß bei den folgenden Titeln jeweils die Differenz der Anfangszeiten zweier aufeinanderfolgender Titel gespeichert wird.

## Claims

1. CD-player with a memory having A storage positions for the storage of the index of an inserted CD-record, characterized in that, if more titles C are in the index of the CD-record than storage positions A are available in the CD-player, partially or totally in stead of the start times of the individual titles the difference of the start times of two consecutive titles are stored.

2. CD-player according to claim 1, characterized in that the start time of the first title is stored and that at the following titles each time the difference of the start times of two consecutive titles are stored.

## Revendications

1. Lecteur de disques compacts avec une mémoire avec des adresses de mémoire A pour mémoriser l'index d'un disque compact mis en place, caractérisé en ce que lorsqu'il y plus de titres C dans l'index du disque compact qu'il n'y a d'adresses de mémoire A dans le lecteur de disques compacts, la différence des temps de début de deux titres respectivement successifs est mémorisée en partie ou en totalité à la place des temps de début des différents titres.

2. Lecteur de disques compacts selon la revendication 1, caractérisé en ce que le temps de début du premier titre est mémorisé et que la différence respective des temps de début de deux titres successifs est mémorisée pour les titres suivants.

EP 0 309 701 B1

| A0 | A1 | A2 | D1 | D2 | | Dn | A0 | A1 | A2 | D1 | D2 | | Dn | | A0 | A1 | A2 | D1 | D2 | | Dn |

G1    G2    Gm

Fig.